Europäisches Patentamt

European Patent Office

Office européen des brevets

(19)

(11) Numéro de publication: **0 060 001**
**B1**

(12) **FASCICULE DE BREVET EUROPEEN**

(45) Date de publication du fascicule du brevet:
24.10.84

(21) Numéro de dépôt: **82200245.7**

(22) Date de dépôt: **26.02.82**

(51) Int. Cl.³: **C 04 B 41/02**

(54) Procédé de prétraitement en vue de faciliter la métallisation par sérigraphie des trous percés dans l'alumine au laser.

(30) Priorité: **06.03.81 FR 8104515**

(43) Date de publication de la demande:
**15.09.82 Bulletin 82/37**

(45) Mention de la délivrance du brevet:
**24.10.84 Bulletin 84/43**

(84) Etats contractants désignés:
**BE CH DE FR GB IT LI NL SE**

(56) Documents cités:
**GB - A - 1 460 502**
**US - A - 3 402 024**
**US - A - 4 217 337**

**27th ELECTRONIC COMPONENTS CONFERENCE,
16-18 mai 1977, Stouffer's National Center Inn,
ARLINGTON (US), V. BORASE et al.: "A new 96 percent
improved alumina substrate", pages 400-403**

(73) Titulaire: **TELECOMMUNICATIONS
RADIOELECTRIQUES ET TELEPHONIQUES T.R.T.,
88, rue Brillat Savarin, F-75013 Paris (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **BE CH DE GB IT LI NL SE**

(72) Inventeur: **Kersuzan, Georges, SOCIETE CIVILE
S.P.I.D. 209 rue de l'Université, F-75007 Paris (FR)**

(74) Mandataire: **Charpail, François et al, Société Civile
S.P.I.D. 209, rue de l'Université, F-75007 Paris (FR)**

## Description

L'invention concerne un procédé de traitement d'un substrat d'alumine percé de trous par laser, en vue de faciliter la métallisation desdits trous par sérigraphie.

La métallisation des trous par sérigraphie, avec par exemple de l'or, est une technique bien au point pour autant que la matière, l'alumine, n'ait pas subi de transformation cristalline après perçage. C'est le cas par exemple des perçages par ultra-sons et par foret diamanté.

Mais le perçage par laser introduit des modifications cristallines. Après le passage du spot laser, la zone superficielle des trous est constituée d'une couche de structure et de texture différentes de celles du substrat, et sur laquelle la métallisation, par exemple avec l'or, ne donne pas une bonne adhérence: on observe des décollements locaux là où le frittage des matériaux ne s'est pas effectué normalement.

Pour remédier à cet inconvénient, il est indispensable de faire disparaître la couche d'alumine formée pendant l'usinage laser. Parmi les différents procédés connus, on peut citer les procédés mécaniques (au jet de sable, au foret diamanté, aux ultra-sons) délicats et onéreux, et les procédés chimiques.

Le but de l'invention est de proposer un procédé de traitement thermique plus facile à mettre en œuvre. Conformément à l'invention, le procédé de traitement d'un substrat d'alumine percé de trous par laser, en vue de permettre une bonne métallisation par sérigraphie desdits trous, est caractérisé en ce que ledit substrat est soumis à un traitement thermique d'une durée comprise entre 2 et 4 h, selon un profil de température comportant un palier compris entre 1500 et 1600° C et d'une durée de 10 à 15 min, la température préférentielle dudit palier étant choisie entre 1540 et 1560° C. Le choix de cette température de palier est guidé par la considération des phénomènes qui se produisent dans l'alumine lorsqu'on procède à une recuisson. Si le frittage d'une alumine a été effectué par exemple à 1700° C, on sait que plus cette alumine est soumise pendant un temps prolongé à des recuissons proches de la température de frittage, plus il y a coalescence des grains d'alumine avec modification des propriétés mécaniques. Par contre, des recuissons faites à plus basse température, par exemple autour de 1200° C, ne modifient pas la texture de l'alumine. Il s'agit donc, dans le procédé conforme à l'invention, de trouver une température suffisamment élevée qui restaure la couche formée pendant l'usinage laser, mais pas trop rapprochée de la température de frittage, de façon à ne pas altérer les propriétés mécaniques de la matière.

La description suivante en regard des dessins annexés, le tout donné à titre d'exemple, fera bien comprendre comment l'invention peut être réalisée.

La fig. 1 représente la coupe transversale d'un substrat d'alumine à l'emplacement d'un trou percé par laser avec la répartition de l'énergie du faisceau laser qui délimite différentes zones;

la fig. 2 montre l'aspect microscopique de l'alumine à la surface d'un trou avant traitement thermique;

la fig. 3 montre sur une coupe transversale du substrat d'alumine, à l'emplacement d'un trou, l'aspect microscopique des différentes zones formées par l'usinage laser;

la fig. 4 montre l'aspect d'une métallisation d'or autour de la surface d'un trou en l'absence de traitement thermique préalable;

la fig. 5 donne le profil de température selon le procédé de traitement conforme à l'invention.

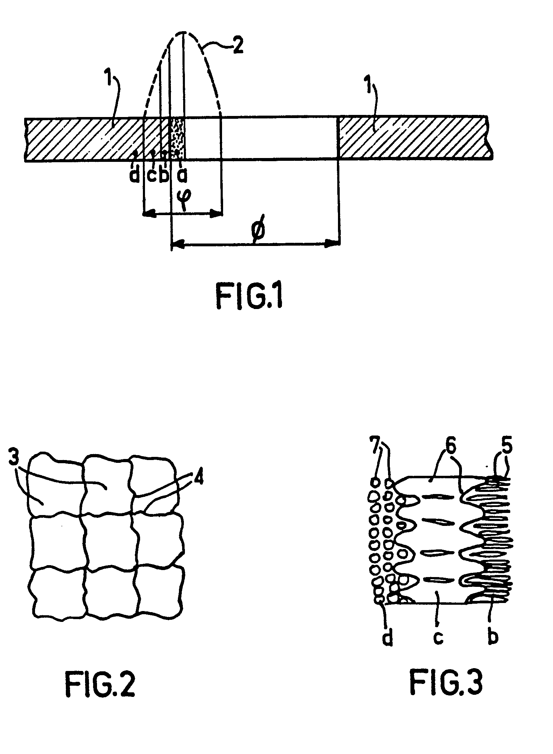

Sur la fig. 1, le substrat d'alumine 1 est percé d'un trou de diamètre $\varnothing$ au moyen d'un spot laser de diamètre $\varphi$. La répartition de l'énergie du faisceau laser selon la courbe 2 délimite dans l'alumine des zones a, b, c et d. Dans la zone centrale a, la plus chaude, on peut considérer que la matière s'est vaporisée. La zone b est constituée par de l'alumine colonnaire et la zone c est une zone de transition à structure cristalline biphasée. La zone d est constituée par de l'alumine normale.

Sur la fig. 2, on a représenté l'aspect microscopique de l'alumine à la surface d'un trou avant traitement thermique. Dans la zone superficielle, le refroidissement a été si brutal que les cristaux n'ont pas eu le temps de s'organiser comme dans le frittage normal, et il s'est formé de l'alumine colonnaire. On observe en surface des microcraquelures en forme d'écailles 3 délimitées par des fissures 4 correspondant au refroidissement brutal.

L'aspect microscopique des zones b, c et d est représenté de manière schématique sur la fig. 3, où l'on observe les variations de structure de l'alumine qui passe d'une texture colonnaire 5 dans la zone b à une texture biphasée 6 dans la zone de transition c et enfin à une texture normale 7 dans la zone d.

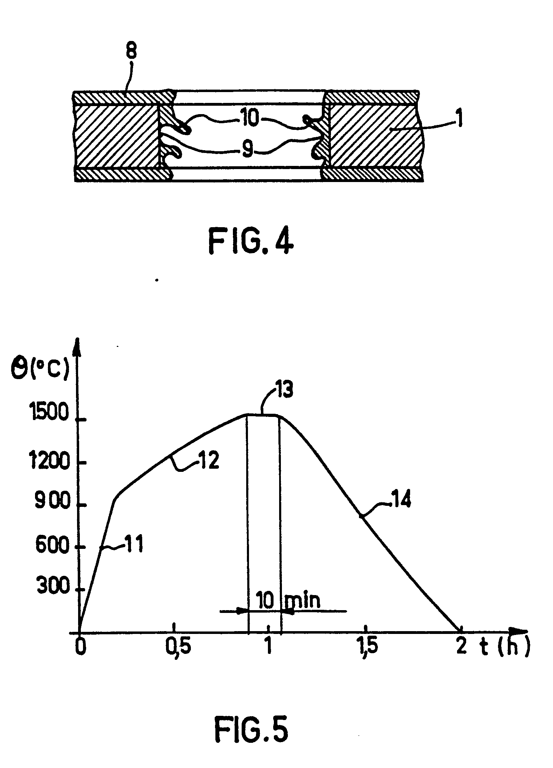

Sur la fig. 4, une coupe transversale du substrat d'alumine 1 montre l'aspect d'une métallisation d'or 8 autour de la surface d'un trou en l'absence de traitement thermique préalable avec des zones de contraction 9 et des écailles 10.

Conformément à l'invention, pour éviter la mauvaise adhérence de l'or, telle qu'elle est montrée à la fig. 4, on effectue un traitement thermique selon le profil de température $\theta$ en fonction du temps t représenté sur la fig. 5 et comportant une montée assez rapide dans sa première partie 11 et plus lente dans sa deuxième partie 12, suivie d'un palier 13 d'une durée comprise entre 10 et 15 min (10 min par exemple) dont la température est comprise entre 1500 et 1600° C (1550° C par exemple) de façon à restaurer les zones d'alumine perturbées, le palier 13 étant suivi d'une descente progressive 14 jusqu'à la température ambiante et la durée totale du traitement thermique étant comprise entre 2 et 4 h (2 h par exemple).

A la suite de ce traitement, toutes les fissures et microcraquelures existant dans l'alumine à la surface des trous ou en n'importe quel autre endroit ont disparu, l'alumine a repris son aspect cristallin et la métallisation des trous est correcte.

## Revendications

1. Procédé de traitement thermique d'un substrat d'alumine percé de trous par laser à une température n'excédant pas 1600° C en vue de faciliter la métallisation par sérigraphie desdits trous, caractérisé en ce que ledit substrat est soumis à un traitement thermique d'une durée totale comprise entre 2 et 4 h selon un profil de température comportant un palier compris entre 1500 et 1600° C et d'une durée de 10 à 15 min.

2. Procédé selon la revendication 1, caractérisé en ce que la température préférentielle dudit palier est choisie entre 1540 et 1560° C.

## Patentansprüche

1. Verfahren zur thermischen Behandlung eines Aluminiumoxidsubstrates, in dem mittels eines Lasers Löcher angebracht worden sind, bei einer Temperatur, die 1600° C nicht überschreitet, um die Metallisierung dieser Löcher durch Siebdrukken zu erleichtern, dadurch gekennzeichnet, dass das genannte Substrat einer thermischen Behandlung mit einer Gesamtdauer von 2 bis 4 h gemäss einer Temperaturkurve mit einer Stufe zwischen 1500 und 1600° C, die 10 bis 15 min dauert, ausgesetzt wird.

2. Verfahren nach Anspruch 1, dadurch gekennzeichnet, dass die Temperatur der genannten Stufe zwischen 1540 und 1560° C liegt.

## Claims

1. A process of thermally treating an aluminium oxide substrate in which holes are made by means of a laser at a temperature not exceeding 1600° C with the object of facilitating metallization by means of screen-printing of these holes, characterized in that the said substrate is subjected to a thermal treatment having an overall duration between 2 and 4 h in accordance with a temperature profile having a plateau between 1500 and 1600° C, and a duration of 10 to 15 min.

2. A process as claimed in Claim 1, characterized in that the preferred temperature of the said plateau is chosen between 1540 and 1560° C.

FIG.1

FIG.2

FIG.3

FIG. 4

FIG.5